# EUROPÄISCHE PATENTSCHRIFT

(11) **EP 2 487 867 B1**
(45) Veröffentlichungstag und Bekanntmachung des Hinweises auf die Patenterteilung: **01.01.2014**
(21) Anmeldenummer: 11153782.5
(22) Anmeldetag: 09.02.2011
(51) Int. Cl.: H04L 29/08, H04L 12/26, H04L 29/06

(54) **Lebenszeichenüberwachung**
Keep alive message monitoring
Surveillance de signes vitaux

(43) Veröffentlichungstag der Anmeldung: 15.08.2012
(73) Patentinhaber: Siemens Aktiengesellschaft, 80333 München (DE)
(72) Erfinder: Freiberg, Klaus, 76771, Hördt (DE); Laforsch, Jürgen, 76187, Karlsruhe (DE); Landgraf, Ingo, 90765, Fürth-Poppenreuth (DE); Thoneick, Simone, 91056, Erlangen (DE)

(56) Entgegenhaltungen:
- US-A1- 2006 020 686
- US-A1- 2008 209 068
- US-A1- 2009 271 517
- US-B1- 6 304 546
- US-B1- 7 634 558
- SIP WG S DONOVAN ET AL: "The SIP Session Timer; draft-ietf-sip-session-timer-08.txt", 20011006, vol. sip, no. 8, 6 October 2001 (2001-10-06), XP015028089, ISSN: 0000-0004

## Beschreibung

Die Erfindung betrifft ein Verfahren zur Verbindungsüberwachung zwischen einem ersten und einem zweiten Kommunikationsgerät, ein Computerprogrammprodukt sowie ein Kommunikationsgerät, welches zur Verbindungsüberwachung eines weiteren Kommunikationsgeräts ausgebildet ist.

In vielen Kommunikationsprozessen, bei denen zwei Kommunikationspartner miteinander in Verbindung stehen, ist es wesentlich festzustellen, ob die Verbindung zwischen diesen besagten Kommunikationspartnern noch steht oder ob diese in der Zwischenzeit abgebrochen ist. Gründe für einen Abbruch können beispielsweise der Ausfall einer der Kommunikationspartner oder aber auch eine Störung der Kommunikationsverbindung selbst zwischen den beiden Kommunikationspartnern sein.

Die US 6 304 546 B1 offenbart beispielsweise ein Verfahren und ein System um zwischen Kommunikationspartnern Lebenszeichentelegramme auszutauschen.

Hierzu ist es beispielsweise beim ISO-Protokoll (ISO 8073) möglich, IDLE-Telegramme als Lebenszeichen gegenseitig zu verschicken. Diese müssen vom Kommunikationspartner beantwortet werden. In anderen Worten sendet hierzu ein erster Kommunikationspartner ein entsprechendes Lebenszeichen an den zweiten Kommunikationspartner, welcher daraufhin im Anschluss an den Empfang dieses Lebenszeichens den Empfang mit einer entsprechenden ACK-Rückmeldung bestätigt. In dem Fall, dass der erste Kommunikationspartner keine entsprechende Rückmeldung von dem zweiten Kommunikationspartner erhält, wird nach einer vordefinierten Zeit ohne Rückmeldung durch den ersten Kommunikationspartner das IDLE-Telegramm wiederholt und wieder auf eine Quittung gewartet. Nach einer vordefinierten Anzahl von Wiederholungen des IDLE und jeweils ohne Quittung wird ein Verbindungsabbruch festgestellt.

Demgegenüber liegt der Erfindung die Aufgabe zugrunde, ein verbessertes Verfahren zur Verbindungsüberwachung, ein verbessertes Computerprogrammprodukt und ein verbessertes Kommunikationsgerät zur Verbindungsüberwachung zu schaffen.

Diese der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Verbindungsüberwachung zwischen einem ersten und einem zweiten Kommunikationsgerät geschaffen, wobei das Verfahren die folgenden Schritte durch das zweite Kommunikationsgerät umfasst:
- Empfang einer ersten Überwachungsanforderung von dem ersten Kommunikationsgerät, wobei die erste Überwachungsanforderung eine erste Überwachungszeit aufweist,
- Bestimmung einer ersten Empfangszeit aus der ersten Überwachungszeit, wobei innerhalb derer nach Empfang des letzten Lebenszeichensignals ein neues Lebenszeichensignal vom anderen Kommunikationspartner empfangen werden muss,
- Empfang von Lebenszeichensignalen von dem ersten Kommunikationsgerät, wobei das Zeitintervall, mit welchem die Lebenszeichentelegramme vom ersten Kommunikationsgerat an das zweite Kommunikationsgerät übertragen werden, der ersten Überwachungszeit entspricht,
- Auslösung eines Abbruchs der Verbindung zu dem ersten Kommunikationsgerät, wenn innerhalb der ersten Empfangszeit nach dem Empfang des letzten Lebenszeichensignals kein neues Lebenszeichensignal von dem ersten Kommunikationsgerät empfangen wird.

In anderen Worten werden damit Lebenszeichentelegramme (im "eingeschwungenen Zustand") in einem festen Takt durch das erste Kommunikationsgerät gesendet und in einem (anderen, größeren) festen Takt durch das zweite Kommunikationsgerät überprüft. Im Unterschied zum Stand der Technik erfordert die Verbindungsüberwachung also nicht, dass das zweite Kommunikationsgerät entsprechende Lebenszeichentelegramme an das erste Kommunikationsgerät sendet, wobei die Lebenszeichentelegramme anschließend durch das erste Kommunikationsgerät quittiert werden müssen, sondern es genügt hier, Lebenszeichentelegramme (auch Lebenszeichensignale genannt) von dem ersten Kommunikationsgerät zu empfangen, wobei aus einer durch das erste Kommunikationsgerät festgelegten Überwachungszeit der Takt in Form der ersten Empfangszeit festgelegt wird, innerhalb welchem eine Überprüfung eines erfolgreichen Empfangs der Lebenszeichentelegramme beim zweiten Kommunikationspartner stattfindet.

Hierzu sei angemerkt, dass die Bestimmung der ersten Empfangszeit aus der ersten Überwachungszeit auf unterschiedliche Art und Weisen stattfinden kann. Eine Möglichkeit ist beispielsweise, dass das erste Kommunikationsgerät über die erste Überwachungszeit eindeutig festlegt, wie groß die erste Empfangszeit am zweiten Kommunikationsgerät sein soll. Möglich ist jedoch auch, dass gerätespezifisch am zweiten Kommunikationsgerät ein Faktor festgelegt ist, mit welchem die empfangene erste Überwachungszeit zu multiplizieren ist, um daraus die erste Empfangszeit zu bestimmen. In einer dritten Alternative wird ein solcher Faktor zusammen mit der Überwachungszeit vom ersten an das zweite Kommunikationsgerät übertragen.

Vorzugsweise entspricht in all diesen Fällen die erste Überwachungszeit dem Zeitintervall, mit welchem die Lebenszeichentelegramme vom ersten Kommunikationsgerät an das zweite Kommunikationsgerät übertragen werden. Damit entspricht sozusagen die erste Überwachungszeit dem Sendetakt auf dem ersten Kommunikationsgerät, wohingegen die daraus bestimmte erste Empfangszeit dem Empfangstakt auf Seiten des zweiten Kommunikationsgeräts entspricht.

### Überwachungszeit

Die Überwachungszeit ergibt sich nach einer Ausführungsform der Erfindung aus dem Produkt von Sendezeit und einem Faktor, wobei jeder dieser Werte vorzugsweise einen spezifischen Einfluss hat: Je größer z.B. der Faktor ist, desto besser können schwankende Laufzeiten einer Strecke abgedeckt werden. Im Falle von Datenübertragungen über Strecken mit Pausenzeiten von mehreren Sekunden ergibt sich dabei folgendes: Wenn jetzt nur seltener gesendet wird kann so eine Pausenzeit bei einem niedrigen Faktor trotzdem zum Verbindungsabbruch führen.

Die Sendezeit legt die Belastung der Kommunikationsstrecke fest. In diesem Takt müssen Telegramme versendet werden. Außerdem gibt sie die Rasterung für die Reaktion vor, also die kürzest mögliche Reaktionszeit. Das Verfahren ist jedoch unabhängig von der Laufzeit der Telegramme auf der Verbindung. Es können mehrere Lebenszeichen vom ersten zum zweiten Kommunikationspartner unterwegs sein (im Abstand des Sendetaktes) bevor das erste Lebenszeichen beim zweiten Kommunikationspartner ankommt.

Ein allgemeiner Vorteil von Ausführungsformen der vorliegenden Erfindung ist, dass zur Verbindungsüberwachung eine entsprechende Rückantwort des Kommunikationspartners nach Senden eines Lebenszeichensignals, nicht benötigt wird. Damit eignet sich dieser Mechanismus der Verbindungsüberwachung insbesondere für solche Kommunikationsstrecken, die eine größere Laufzeit (delay) haben, zum Beispiel Satellitenverbindungen. Eine Sequenz "Lebenszeichentelegramm-Auftrag senden und warten auf Quittung bevor ein neuer Auftrag gesendet wird" führt zu einer Verschlechterung der Reaktionszeit auf einen Verbindungsabbruch, denn solange Lebenszeichentelegramme aufgrund der hohen Signallaufzeit empfangen werden, gilt die hierzu verwendete Verbindung als in Ordnung. Eine Überwachung per "Auftrag" und "Quittung", wobei erst nach dem Empfang der "Quittung" der nächste "Auftrag" gesendet wird, liefert also eine geringere Überwachungsqualität, da die Latenzzeit berücksichtigt werden muss. Senden hingegen beide Seiten kontinuierlich und unabhängig voneinander Lebenszeichentelegramme entfällt jede Art von Quittierung, sodass auch bei langen Signallaufzeiten eine kurze Reaktionszeit auf einen Verbindungsabbruch gewährleistet werden kann.

Es sei angemerkt, dass die vorliegende Erfindung auf alle Arten von Kommunikationsverbindungen und unterlagerten Busanbindungen angewendet werden kann: Neben der Verwendung von TCP/IP umfasst dies auch UDP, TLS und jegliche weitere Arten von Transportprotokollen, welche z.B. in industriellen Standards eingesetzt werden wie Profibus oder PROFINET IO, CAN-Bus, Mod-Bus.

Nach einer Ausführungsform der Erfindung teilt das zweite Kommunikationsgerät nach Empfang der ersten Überwachungsanforderung dem ersten Kommunikationsgerät mit, ob die Kommunikationsverbindung zwischen dem ersten und zweiten Kommunikationsgerät überwacht werden soll oder nicht. Damit stellt das erste Kommunikationsgerät mit Senden der ersten Überwachungsanforderung eine Anfrage an das zweite Kommunikationsgerät, ob dieses damit einverstanden ist, eine Überwachung der Kommunikationsverbindung zwischen den beiden Kommunikationsgeräten durchzuführen.

Ist dies der Fall, bestätigt dies das zweite Kommunikationsgerät dem ersten Kommunikationsgerät. Wenn das zweite Kommunikationsgerät nach Empfang der ersten Überwachungsanforderung festlegt, dass es zur Verbindungsüberwachung zustimmt, so wird es vorzugsweise an das erste Kommunikationsgerät eine eigene (zweite) Überwachungszeit, optional zusammen mit einer Überwachungsanforderung, an das erste Kommunikationsgerät senden.

Diese zweite Überwachungszeit dient analog zum oben beschriebenen Verfahren einer Auslösung eines Verbindungsabbruchs durch das erste Kommunikationsgerät, wenn innerhalb einer aus der zweiten Überwachungszeit ermittelten zweiten Empfangszeit nach Empfang eines letzten Lebenszeichensignals von dem zweiten Kommunikationsgerät kein neues Lebenszeichensignal von dem zweiten Kommunikationsgerät durch das erste Kommunikationsgerät empfangen wird. In anderen Worten ermöglicht diese Ausführungsform eine gegenseitige Überwachung der Kommunikationsverbindung zwischen den beiden Kommunikationsgeräten. Nach einer weiteren Ausführungsform der Erfindung umfasst das Verfahren den Empfang einer dynamisch geänderten ersten Überwachungszeit von dem ersten durch das zweite Kommunikationsgerät. Somit wird eine dynamische Verbindungsüberwachung zwischen dem ersten und dem zweiten Kommunikationsgerät ermöglicht, wobei die Überwachungszeit dynamisch durch das erste Kommunikationsgerät festgelegt wird. Denkbar ist hier beispielsweise, dass das erste Kommunikationsgerät aufgrund einer hohen Systemauslastung feststellt, über einen gewissen Zeitraum nicht in der Lage zu sein, weiter Lebenszeichensignale im bisherigen Takt an das zweite Kommunikationsgerät zu übermitteln.

Um zu verhindern, dass nun das zweite Kommunikationsgerät einen Verbindungsabbruch auslöst, kann also das erste Kommunikationsgerät dynamisch die erste Überwachungszeit ändern, womit sich auch die erste Empfangszeit am zweiten Kommunikationsgerät ändert. Beispielsweise können die Zeitintervalle vergrößert werden, innerhalb der nach Empfang des letzten Lebenszeichensignals ein neues Lebenszeichensignal von dem ersten Kommunikationsgerät empfangen werden muss, um eine Auslösung eines Verbindungsabbruchs zu verhindern. Selbstverständlich ist auch eine Verkürzung der ersten Überwachungszeit entsprechend den aktuellen Systemanforderungen möglich.

Nach Ausführungsformen der Erfindung kann die erste Überwachungszeit sogar den Wert unendlich annehmen. Damit teilt das erste Kommunikationsgerät dem zweiten Kommunikationsgerät mit, eine entsprechende Empfangsüberwachung auszusetzen. Durch anschließende Übertragung einer "vernünftigen Zeit" kann die Überwachung jedoch jederzeit wieder reaktiviert werden. Nach einer weiteren Ausführungsform der Erfindung ist die erste Empfangszeit unabhängig von der Signallaufzeit einer Übertragung von Daten vom ersten zum zweiten Kommunikationsgerät. Denn, wie bereits oben erwähnt, werden die Lebenszeichentelegramme im festen Takt gesendet und in einem anderen festen Takt überprüft, sodass im eingeschwungenen Zustand die Signallaufzeit keinerlei Rolle mehr spielt. Nach einer weiteren Ausführungsform der Erfindung ist die zweite Überwachungszeit unabhängig von der ersten Überwachungszeit. Damit können das erste und das zweite Kommunikationsgerät unabhängig voneinander dem jeweils anderen Partner mitteilen, inwieweit eine Verbindungsüberwachung durch diesen Partner stattfinden soll. Damit kann den individuellen systembedingten Gegebenheiten der jeweiligen Kommunikationsgeräte individuell Rechnung getragen werden. Beide Kommunikationsgeräte können dynamisch die Verbindungsüberwachung hierzu ändern.

Nach einer weiteren Ausführungsform der Erfindung umfasst das Verfahren ferner ein Senden von Lebenszeichensignalen durch das zweite Kommunikationsgerät an das erste Kommunikationsgerät, wobei nach dem Senden des letzten Lebenszeichensignals ein neues Lebenszeichensignal innerhalb der zweiten Überwachungszeit übermittelt wird. Damit wird in anderen Worten, wie bereits oben erwähnt, ein Sendetakt bezüglich des zweiten Kommunikationsgeräts verwendet, mit welchem das zweite Kommunikationsgerät seine Lebenszeichensignale an das erste Kommunikationsgerät übermittelt.

Nach einer weiteren Ausführungsform der Erfindung umfasst ein Lebenszeichensignal zum Beispiel jede Art von Signal, welches bei der Kommunikation von Nutzdaten zwischen dem ersten und zweiten Kommunikationsgerät übertragen wird. Denn solange Daten am zweiten Kommunikationsgerät vom ersten Kommunikationsgerät empfangen werden, kann das zweite Kommunikationsgerät davon ausgehen, dass eine intakte Kommunikationsverbindung zwischen dem ersten und zweiten Kommunikationsgerät vorliegt, also kein Verbindungsabbruch besteht. Spätestens jedoch dann, wenn über einen gewissen Zeitraum keine Signale in Verbindung mit Nutzdaten von dem ersten an das zweite Kommunikationsgerät übertragen werden, sendet das erste Kommunikationsgerät spezielle Signale an das zweite Kommunikationsgerät, wobei es sich bei diesen Signalen um spezielle Lebenszeichensignale handelt, d.h. Signale, welche speziell zum Zweck der Signalisierung eines Lebenszeichens gesendet werden. Ein solches Lebenszeichensignal ist z.B. in diesem Fall durch ein Datenpaket gegeben, welches speziell als "Lebenszeichen" gekennzeichnet ist.

Beispielsweise kann hierzu das erste Kommunikationsgerät feststellen, ob innerhalb seiner vorgegebenen Sendezeit nach Senden des letzten Nutzdatensignals ein neues Nutzdatensignal an das zweite Kommunikationsgerät übermittelt werden kann oder nicht. Insbesondere dann wenn eine solche Datenübertragung nicht zu erwarten ist, wird das erste Kommunikationsgerät ein spezielles Lebenszeichensignal an das zweite Kommunikationsgerät übertragen.

Wie bereits oben erwähnt, ermöglicht die Erfindung, dass die erste Überwachungszeit dynamisch geändert werden kann. Hierzu muss die erste Überwachungszeit in entsprechender Weise vom ersten Kommunikationsgerät an das zweite Kommunikationsgerät mitgeteilt werden. Dies kann beispielsweise so erfolgen, dass mit der Übertragung von "speziellen" Lebenszeichensignalen auch gleichzeitig die aktuell verwendete erste Überwachungszeit mit übertragen wird. Soweit dies technisch möglich ist, besteht jedoch auch die Möglichkeit, die erste Überwachungszeit im Rahmen der Nutzdatenkommunikation vom ersten an das zweite Kommunikationsgerät zu übertragen. Beispielsweise kann hierzu die aktuell zu verwendete erste Überwachungszeit im Datenheader enthalten sein.

Nach einer Ausführungsform der Erfindung erfolgt die Verbindungsüberwachung zwischen dem ersten und zweiten Kommunikationsgerät über einen ersten Kommunikationskanal, wobei das zweite Kommunikationsgerät ferner gleichzeitig über einen zweiten Kommunikationskanal mit dem ersten Kommunikationsgerät verbunden ist, wobei im Fall der Auslösung des Abbruchs der Verbindung durch das zweite Kommunikationsgerät das zweite Kommunikationsgerät die Kommunikation über den ersten Kommunikationskanal abbricht und die Kommunikation über den zweiten Kommunikationskanal fortgesetzt wird.

In anderen Worten sind die beiden Kommunikationsgeräte über zwei sogenannte "unterlagerte Verbindungen" miteinander verbunden. Sobald auf einer der aufgebauten unterlagerten Verbindungen ein Verbindungsabbruch ausgelöst wird, führt dies dazu, dass die Kommunikation daran unmittelbar anschließend auf der zweiten unterlagerten Verbindung fortgesetzt wird.

Selbstverständlich können diese beiden unterlagerten Verbindungen unabhängig voneinander durch die beiden Kommunikationspartner über das Verfahren zur Verbindungsüberwachung überwacht werden. Jede unterlagerte Verbindung kann dabei mit unterschiedlichen Zeiten überwacht werden. Es sei noch darauf verwiesen, dass es grundsätzlich möglich ist, dass ein Kommunikationspartner eine beliebige Anzahl von Kommunikationsverbindungen mit unterschiedlichen Überwachungszeiten überwacht. Ebenso ist es auch möglich, dass Kommunikationsverbindungen mit mehr als einem Partner mit jeweils unterschiedlichen Überwachungszeiten überwacht werden.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung ein Kommunikationsgerät, wobei das Kommunikationsgerät zur Verbindungsüberwachung eines weiteren Kommunikationsgeräts ausgebildet ist, wobei das Kommunikationsgerät zur Durchführung der folgenden Schritte ausgebildet ist:
- Empfang einer ersten Überwachungsanforderung von dem weiteren Kommunikationsgerät, wobei die erste Überwachungsanforderung eine erste Überwachungszeit aufweist,
- Bestimmung einer ersten Empfangszeit aus der ersten Überwachungszeit, wobei innerhalb derer nach Empfang des letzten Lebenszeichensignals ein neues Lebenszeichensignal vom anderen Kommunikationspartner empfangen werden muss,
- Empfang von Lebenszeichensignalen von dem weiteren Kommunikationsgerät, wobei das Zeitintervall, mit welchem die Lebenszeichentelegramme vom ersten Kommunikationsgerat an das zweite Kommunikationsgerät übertragen werden, der ersten Überwachungszeit entspricht,
- Auslösen eines Abbruchs der Verbindung zu dem weiteren Kommunikationsgerät, welche innerhalb der ersten Empfangszeit nach dem Empfang des letzten Lebenszeichensignals kein neues Lebenszeichensignal von dem weiteren Kommunikationsgerät empfangen wird.

Im Folgenden werden bevorzugte Ausführungsformen der Erfindung anhand der Zeichnungen näher erläutert. Es zeigen:
- Figur 1: eine Verbindungsüberwachung mit Erkennung eines Abbruchs,
- Figur 2: eine Verbindungsüberwachung bei Produktivbetrieb,
- Figur 3: eine Verbindungsüberwachung ohne Produktivbetrieb,
- Figur 4: eine H-Verbindung mit mehreren unterlagerten Verbindungen.

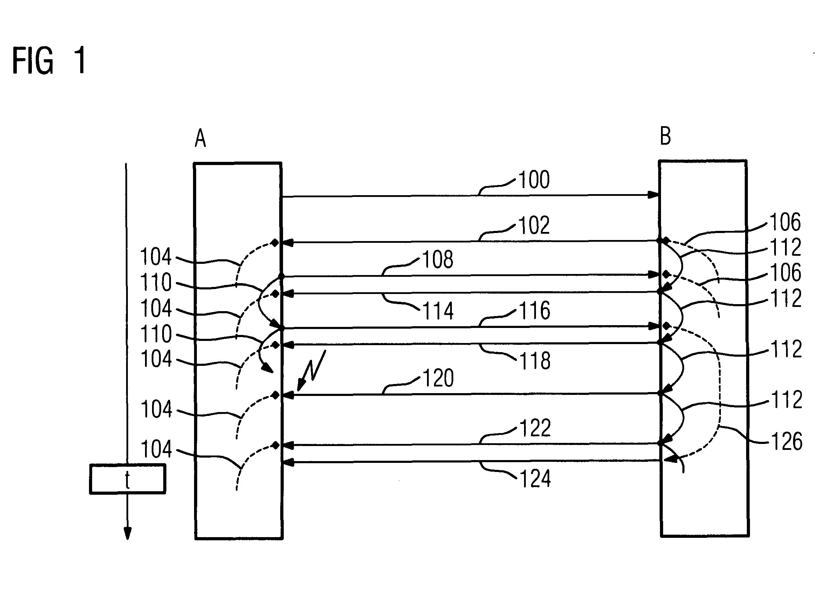

Die Figur 1 zeigt Schritte eines Verfahrens zur Verbindungsüberwachung zwischen einem ersten und einem zweiten Kommunikationsgerät, im Folgenden als "Kommunikationsgeräte" oder gleichwertig als "Kommunikationspartner" A und B bezeichnet. Die folgende Beschreibung ist dabei unabhängig von der Art der Kommunikationsverbindung, über welche A und B miteinander in Verbindung stehen.

In Schritt 100 findet ein Aufbau einer unterlagerten Verbindung mit Überwachungsanforderung ausgehend von Kommunikationspartner A an Kommunikationspartner B statt. Kommunikationspartner B quittiert den Aufbau der unterlagerten Verbindung mit Überwachungsanforderung in Schritt 102. Sowohl in Schritt 100 als auch in Schritt 102 wird jeweils eine Überwachungszeit von A an B bzw. von B an A übertragen. Im Folgenden sei ohne Beschränkung der Allgemeinheit davon ausgegangen, dass die Überwachungszeit die jeweilige Zeit ist, welche den Sendetakt für A bzw. B unabhängig voneinander festlegt. Aus diesen empfangenen Überwachungszeiten kann daraufhin der jeweilige Partner seine Empfangszeit bestimmen, innerhalb derer nach Empfang des letzten Lebenszeichensignals ein neues Lebenszeichensignal vom anderen Kommunikationspartner empfangen werden muss, sodass die Auslösung eines Verbindungsabbruchs verhindert wird.

Die in Figur 1 gezeigten gestrichelten Linien bei Kommunikationspartner A und B, d.h. die Linien 104 und 106 geben jeweils den Empfangstimer wieder, der entlang der vertikalen Zeitachse t läuft. Die durchgezogenen Linien 110 und 112 hingegen geben jeweils bei den Kommunikationspartnern A und B den Sendetimer an, also den Takt, mit welchem Lebenszeichen an den jeweiligen Partner gesendet werden.

In Schritt 100 wurde eine erste Überwachungszeit von A an B übermittelt und in Schritt 102 wurde eine zweite Überwachungszeit von B an A übermittelt. In der vorliegenden Ausführungsform gibt die erste Überwachungszeit dabei den Teil an, mit welchem Kommunikationspartner A seine Lebenszeichen an Kommunikationspartner B übermittelt. Analog hierzu gibt die zweite Überwachungszeit jenen Takt an, mit welchem Kommunikationspartner B seine Lebenszeichen an Kommunikationspartner A sendet. Die beiden zugehörigen Sendetimer 110 und 112 müssen dabei nicht identisch sein.

Ebenfalls aus der jeweiligen ersten und zweiten Überwachungszeit können die Kommunikationspartner die Zeiten bestimmen, innerhalb derer nach Empfang des letzten Lebenszeichensignals ein neues Lebenszeichensignal vom gegenüberliegenden Kommunikationspartner empfangen werden muss, um die Auslösung eines Verbindungsabbruchs zu vermeiden. So kann Kommunikationspartner B beispielsweise aus der in Schritt 100 übertragenen ersten Überwachungszeit seine zugehörige erste Empfangszeit bestimmen, innerhalb derer ein nächstes Lebenszeichensignal von A erwartet wird.

Mit dem Empfang der Quittierung des Aufbaus der unterlagerten Verbindung in Schritt 102 interpretiert dies A bereits als das erste Lebenszeichen von B, woraufhin der Empfangstimer 104 bei Kommunikationspartner A getriggert wird. Bezüglich B besteht beispielsweise die Möglichkeit, den allerersten Sendetimer 106 mit Senden der Quittierung in Schritt 102 zu triggern.

In Schritt 108 sendet A an B ein erstes Lebenszeichensignal, welches bei B zu einem Zeitpunkt ankommt, zu welchem der Empfangstimer 106 noch nicht abgelaufen ist. Das Empfangen dieses Lebenszeichens triggert jedoch sofort einen Neubeginn des Empfangstimers, wobei B weiter erwartet, dass auch vor Ablauf dieses nächsten Empfangstimers 106 das nächste Lebenszeichensignal von A empfangen wird.

Unabhängig von dem Empfang des Lebenszeichensignals in Schritt 108 sendet B an A ein eigenes Lebenszeichensignal in Schritt 114, da der entsprechende Sendetimer 112 bei B abgelaufen ist. Dieses Lebenszeichensignal aus Schritt 114 kommt bei A zu einem Zeitpunkt an, an welchem der Empfangstimer 104 noch nicht abgelaufen ist. Dies triggert jedoch unmittelbar mit Empfang des Lebenszeichensignals in Schritt 114 den Neubeginn des Empfangstimers 104 bei A.

Wiederum unabhängig vom Empfang des Lebenszeichens in Schritt 114 sendet A an B ein weiteres Lebenszeichen in Schritt 116, da der entsprechende Sendetimer bei A zu diesem zugehörigen Zeitpunkt abgelaufen ist. Der Sendetimer wurde mit dem Senden des letzten Lebenszeichensignals in Schritt 108 getriggert. Als Reaktion hierauf, also dem Empfang dieses Lebenszeichensignals in Schritt 116, wird der entsprechende Empfangstimer 126 bei B neu getriggert - außerdem erreicht das Lebenszeichensignal in Schritt 116 Kommunikationspartner B vor Ablauf des vorigen Empfangstimers 106, sodass auch hier kein Verbindungsabbruch ausgelöst wird.

Wiederum unabhängig davon sendet B an A in Schritt 118 ein eigenes Lebenszeichen, da nach dem Senden des letzten Lebenszeichensignals in Schritt 114 der entsprechende Sendetimer 112 bei B abgelaufen ist. Dieses Lebenszeichen aus Schritt 118 wird bei A empfangen, wodurch der zugehörige Empfangstimer 104 bei A getriggert wird.

Im Folgenden sei angenommen, dass es zum Abbruch einer Verbindung zwischen A und B kommt: Durch Senden des letzten Lebenszeichensignals in Schritt 116 durch A wurde der entsprechende zugehörige Sendetimer 110 getriggert. Wie jedoch ersichtlich ist, läuft dieser Sendetimer 110 ab, ohne dass es zu einer erneuten Übermittlung eines Lebenszeichens von A zu B kommt. Da jedoch das Senden der Lebenszeichen von B an A unabhängig vom Empfang der Lebenszeichen bei Kommunikationspartner B ist, sendet B auch weiterhin in den Schritten 120 und 122 entsprechend seinen eigenen ablaufenden Sendetimern 112 seine Lebenszeichen an A. Dies kann bei A entsprechende Empfangstimer 104 triggern, wobei dies jedoch nur dann möglich ist, wenn A überhaupt Daten von B empfangen kann, Daten von B empfangen möchte und/oder die empfangenen Daten überhaupt verarbeiten kann. Entscheidend ist in Figur 1 jedoch, dass A an B keine weiteren Lebenszeichen übermittelt, sodass in Schritt 126 der mit Schritt 116 getriggerte Empfangstimer abläuft, was dazu führt, dass Kommunikationspartner B in Schritt 124 die unterlagerte Verbindung abbricht.

In anderen Worten löst damit B einen Verbindungsabbruch aus, da innerhalb der Empfangszeit nach Empfang des letzten Lebenszeichensignals in Schritt 116 kein weiteres Lebenszeichensignal von Kommunikationspartner A empfangen wurde.

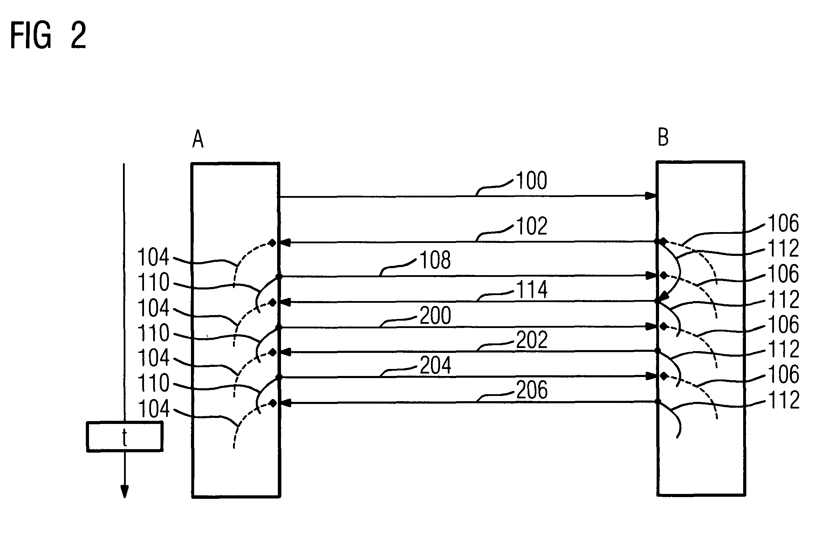

Die Figur 2 zeigt ein Beispiel einer Verbindungsüberwachung bei Produktivbetrieb. Unter Produktivbetrieb wird dabei das Senden von Signalen verstanden, welche bei der Kommunikation von Nutzdaten zwischen den Kommunikationspartnern A und B übertragen werden. Es handelt sich dabei also nicht um spezielle Lebenszeichensignale, sondern lediglich um ohnehin im Rahmen einer Nutzdatenübertragung anfallende Datenpakete.

Die Schritte 100, 102, 108 und 114 sind dabei mit identischen Bezugszeichen gekennzeichneten Schritten der Figur 1 identisch. D. h. in Schritt 100 wird eine unterlagerte Verbindung mit Überwachungsanforderung zwischen den Kommunikationspartnern A und B aufgebaut, welche B in Schritt 102 quittiert. Daraufhin wird ein erstes Lebenszeichen von A nach B in Schritt 108 gesendet und ein Lebenszeichen von B nach A in Schritt 114 gesendet. Nach Empfang des Lebenszeichens in Schritt 108 wird wiederum der entsprechende Empfangstimer 106 bei B getriggert, welcher jedoch nicht abläuft, da in Schritt 200 Nutzdaten bei B empfangen werden.

Mit dem Senden des letzten Lebenszeichens in Schritt 108 durch A wurde auch der zugehörige Sendetimer 110 getriggert. Dieser Sendetimer läuft jedoch im Gegensatz zur Ausführungsform der Figur 1 nicht ab, sondern wird in Schritt 200 neu getriggert, da A an B Nutzdaten sendet. Die in Schritt 200 bei B empfangenen Nutzdaten triggern wiederum dort den Neubeginn des entsprechenden Empfangstimers 106.

Die unterlagerte Verbindung wird somit wie im Beispiel der Fig. 1 aufgebaut, wobei jedoch nach einiger Zeit auf beiden Seiten der Produktivbetrieb einsetzt. Dieser findet so häufig bzw. schnell statt, dass die Timer für die Verbindungsüberwachung nicht mehr ablaufen, sondern immer nur neu getriggert werden. Es werden dann für die Verbindungsüberwachung keine extra Lebenszeichen benötigt, sondern der normale Produktivbetrieb reicht für die Ausfallerkennung aus.

So wurde z.B. mit dem Senden des Lebenszeichens in Schritt 114 durch B auch dort der zugehörige Sendetimer getriggert, welcher jedoch ebenfalls nicht abläuft, da in Schritt 202 Nutzdaten von B an A übertragen werden. Dies setzt also in Schritt 202 bei B den Sendetimer zurück. Bei A werden diese in Schritt 202 gesendete Nutzdaten empfangen und dadurch der in Schritt 114 getriggerte Empfangstimer zurückgesetzt. Der Empfangstimer 104 wird dadurch neu getriggert.

Noch vor Ablauf des Sendetimers 110 sendet A an B wiederum Nutzdaten (Schritt 204), wodurch der Sendetimer 110 neu getriggert wird. In ähnlicher Weise sendet in Schritt 206 B Nutzdaten an A, noch bevor der zugehörige Sendetimer 112 abgelaufen ist.

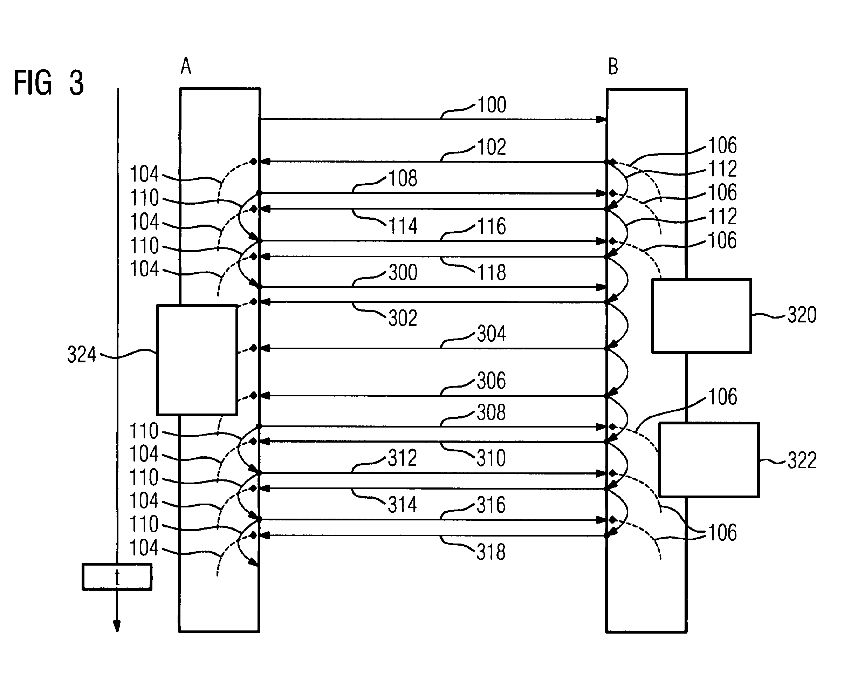

Die Figur 3 zeigt ein Beispiel eines Verfahrens zur Verbindungsüberwachung ohne Produktivbetrieb. Dabei erfolgt zunächst die Verbindungsüberwachung zwischen A und B in den Schritten 100, 102, 108, 114, 116 und 118 identisch zu den entsprechenden Schritten, wie sie bereits bezüglich Figur 1 erläutert wurden.

Nach Senden des letzten Lebenszeichens von A nach B in Schritt 116 sendet A an B in Schritt 300 nach Ablauf des Sendetimers 110 ein neues Lebenszeichen. Mit der Übertragung des Lebenszeichens sendet jedoch A an B zusätzlich eine dynamisch geänderte Überwachungszeit, nämlich die Überwachungszeit "unendlich", da A wegen zum Beispiel interner Abläufe in der nächsten Zeit keine Lebenszeiten senden kann und B, der die internen Abläufe von A nicht kennt, die Verbindung in dieser Zeit nicht abbrechen soll. Dies führt dazu, dass der entsprechende Empfangstimer 106 bei B nach Empfang des Lebenszeichens 300 ebenfalls auf "unendlich" in Schritt 320 gesetzt wird, wodurch dieser Empfangstimer nicht mehr ablaufen kann.

In den Schritten 302 bis 306 sendet B an A weiterhin eigene Lebenszeichen, wobei jedoch A freigestellt ist, ob A diesen Empfang überwachen soll oder nicht (Schritt 324).

Kurz vor Durchführung des Schritts 308 ist A wieder im normalen Betriebszustand, in dem es eine Überwachung durch B wünscht. Aus diesem Grund teilt A an B in Schritt 308 wieder eine "vernünftige" Überwachungszeit mit. Dies kann ein neuer Zeitwert sein oder auch der Ursprungswert, welcher verwendet wurde, bevor die Zeit auf unendlich gesetzt wurde. Damit überträgt A an B in Schritt 308 neben einem Lebenszeichen wiederum die geänderte Überwachungszeit, was in Schritt 322 bei B dazu führt, dass B ab diesem Zeitpunkt den Empfang der Lebenszeichen wiederum überwacht.

Das von B an A in Schritt 310 gesendete Lebenszeichen wird von A empfangen und triggert dort den Empfangstimer 104. In Schritt 312 ist der Sendetimer bei A abgelaufen und A sendet in gewohnter Weise an B ein Lebenszeichen, welches von B auch vor Ablauf des dortigen Empfangstimers 106 empfangen wird. Das Verfahren setzt sich entsprechend den analogen Schritten 314 bis 318 fort.

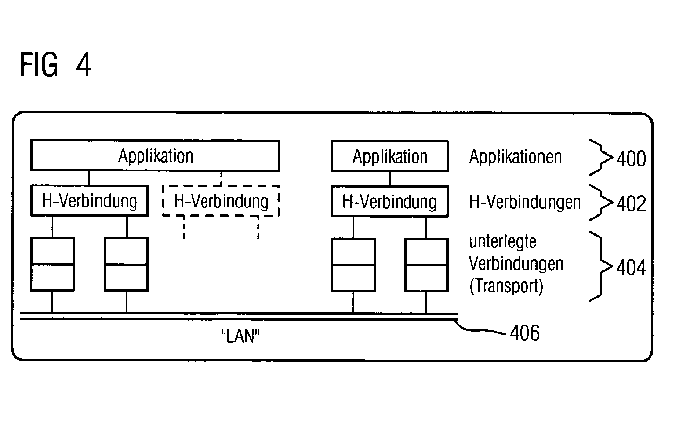

Die Figur 4 zeigt ein Beispiel einer H-Verbindung (hochverfügbare Verbindung) mit unterlagerten Teilverbindungen. Diesem Konzept liegt die Idee zugrunde, jeder Applikation 400 eine oder mehrere H-Verbindungen 402 zuzuweisen, wobei wiederum jede H-Verbindung 402 zumindest zwei unterlagerte Transportverbindungen wie zum Beispiel Kommunikationskanäle 404 aufweist. Grundsätzlich kommuniziert die Applikation 400 mit einer beliebigen anderen Applikation unter Verwendung der H-Verbindungen 402, ohne jedoch Kenntnis darüber haben zu müssen, wie viele Transportverbindungen der verwendeten H-Verbindung 402 unterlagert sind.

Über die in Figur 4 gezeigte LAN-Verbindung 406 können nun mehrere Applikationen miteinander kommunizieren. Weitet man dieses Grundkonzept auf sogenannte H-Systeme aus, also Systeme, die eine synchronisierte Master- und Reserve-CPU aufweisen, die miteinander über zugehörige H-Verbindungen und unterlagerte Transportverbindungen gekoppelt sind, so zeigt sich ein weiterer Anwendungsfall für das obig beschriebene Verfahren:

Im H-System gibt es ein "Ankoppeln und Aufdaten" (AuA). So wird der Zeitraum genannt, den das H-System braucht, um den redundanten Betrieb von Master- und Reserve-CPU zu erreichen. In diesem Zeitraum des AuA ist die Reserve damit beschäftigt, vom Master alle Daten, Zustände, Puffer und Verbindungen zu holen, um sich in denselben Bearbeitungszustand zu versetzen wie der Master. Allerdings muss für diesen Zweck die Kommunikation zwischen Master- und Reserve-CPU zeitweise angehalten werden, ohne dass jedoch die Verbindungen abgebrochen werden.

Eine Verbindungsüberwachung durch PING-Telegramme würde in diesem Fall während des "Anhaltens nun aber nicht mehr funktionieren, da dieser Zeitraum größer ist als die "normalen" Überwachungszeiten und entsprechend keine Lebenszeichen verschickt werden könnten. Der Kommunikationspartner, der nicht weiß, dass der andere gerade beim Ankoppeln und Aufdaten ist, würde also die Verbindung wegen fehlender Lebenszeichen abbrechen.

Wird hingegen das obig beschriebene Verfahren verwendet, so wird beim Verbindungsaufbau zwischen den beiden CPUs ausgehandelt, ob diese Verbindungen überwacht werden sollen oder nicht. Bei gewünschter Überwachung wird jede unterlagerte Verbindung der H-Verbindung in diese Überwachung einbezogen. Die Überwachung sieht dann beispielsweise wie folgt aus: Jede Seite sendet mindestens in einem Takt x Telegramme (entweder, weil Produktivbetrieb gesendet wird oder ein Lebenszeichentelegramm ersatzweise gesendet wird) und erwartet, mindestens in einem Takt y, Telegramme zu empfangen. Dabei ist y zum Beispiel ≥ 2 . x. Wird im Takt y kein Telegramm empfangen, so wird diese unterlagerte Verbindung abgebrochen und die Kommunikation auf einer anderen unterlagerten Verbindung fortgesetzt. Der Überwachungstakt der einzelnen unterlagerten Verbindungen kann dabei unterschiedlich sein.

Während des Ankoppelns und Aufdatens kann durch Senden einer dynamisch geänderten Zeit zur Verbindungsüberwachung dem Kommunikationspartner mitgeteilt werden, eine geänderte Empfangsüberwachung durchzuführen. Beispielsweise kann als Sonderzeit wiederum "unendlich" übertragen werden, was die Empfangsüberwachung beim Kommunikationspartner ausschaltet, ohne dass ein Abbau und erneuter Aufbau der unterlagerten Verbindung notwendig wäre. Das Ankoppeln und Aufdaten kann durchgeführt werden, wobei im Anschluss eine "vernünftige" Zeit, d.h. eine Zeit kleiner als unendlich, an den Kommunikationspartner übertragen werden kann, wodurch die Überwachung wieder aktiviert wird.

Durch z.B. ein RoundRobin-Verfahren für die Nutzdaten kann eine Reduktion der Lebenszeichentelegramme erreicht werden, wenn die Kommunikation häufiger stattfindet als die Verbindungsüberwachung eingestellt ist, d.h. der Protokollverkehr mit Nutzdaten ersetzt hier das Senden von speziellen Lebenszeichentelegrammen - die Nutzdaten entsprechen wie obig diskutiert bereits den Lebenszeichen. Werden die Nutzdaten verteilt über die einzelnen unterlagerten Verbindungen der H-Verbindung verschickt, kann auch eine Verteilung der Kommunikationslast erreicht werden.

Zusammengefasst ergeben sich für das obige Verfahren folgende Vorteile: Eine Verbindungsüberwachung kann z.B. "End-to-End" erfolgen über Router und Gateways hinweg. Damit ist es egal, welche Busphysik oder Protokolle zwischen den Endpunkten liegen. Die Überwachung geht von Kommunikationsendpunkt zu Kommunikationsendpunkt. Ferner ist die Verbindungsüberwachung dynamisch und kann während der Lebenszeit der Verbindung an die aktuelle Situation der einzelnen Kommunikationspartner angepasst werden. D.h.: lässt die eigene aktuelle Situation keine Überwachung zu, so wird der Kommunikationspartner davon informiert und muss seine Überwachung entsprechend anpassen. Kann wieder streng überwacht werden, so kann die Zeit wieder angepasst werden, ohne die Verbindung abbauen zu müssen.

Mit jedem Lebenszeichentelegramm wird übermittelt, wann das nächste Lebenszeichen ggf. übertragen wird. Damit ist eine schnelle Adaption des Sendeintervalls möglich. Außerdem entscheidet jeder Kommunikationspartner lokal, in welchem Intervall er die Lebenszeichentelegramme sendet. Jeder Kommunikationspartner kann lokal den Ausfall einer unterlagerten Verbindung erkennen und daraufhin die unterlagerte Verbindung lokal abbrechen, sowie eine neue Verbindung aufbauen oder auf eine "Standby"-Verbindung umschalten.

Wie bereits erwähnt können die Überwachungszeiten für jede unterlagerte Verbindung individuell eingestellt werden. Damit kann z.B. eine H-Verbindung unterlagerte Verbindungen mit unterschiedlichen Latenzzeiten (Delays) incl. Verbindungsüberwachung nutzen, wie dies z.B. bei einer Satelliten-Verbindung hilfreich wäre. Im eingeschwungenen Zustand unterscheiden sich die Mechanismen zur Auswertung der Verbindungsüberwachung nicht, da stets nach der Zeit x ein Lebenszeichentelegramm gesendet bzw. nach der Zeit y empfangen wird (unabhängig von der Latenzzeit), wenn kein Produktivbetrieb vorliegt. Dieses Verfahren funktioniert somit auch dann, wenn die Datenübertragung mit einer größeren Latenzzeit (Delay) erfolgt, vgl. Satelliten-Verbindung. Die Anlaufphase kann durch die dynamische Aktualisierung der Überwachungszeit auch überwacht werden.

## Patentansprüche

1. Verfahren zur Verbindungsüberwachung zwischen einem ersten und einem zweiten Kommunikationsgerät, wobei das Verfahren die folgenden Schritte durch das zweite Kommunikationsgerät umfasst:
- Empfang (100) einer ersten Überwachungsanforderung von dem ersten Kommunikationsgerät, wobei die erste Überwachungsanforderung eine erste Überwachungszeit aufweist,
- Bestimmung einer ersten Empfangszeit aus der ersten Überwachungszeit, wobei innerhalb der ersten Empfangszeit nach Empfang eines letzten Lebenszeichensignals ein neues Lebenszeichensignal vom anderen Kommunikationspartner empfangen werden muss,
- Empfang (108; 114; 118; 120; 122; 124; 200; 202; 204; 206; 300; 302; 304; 306; 308; 310; 312; 314; 316; 318) von Lebenszeichensignalen von dem ersten Kommunikationsgerät, wobei ein Zeitintervall, mit welchem die Lebenszeichensignale vom ersten Kommunikationsgerat an das zweite Kommunikationsgerät übertragen werden, der ersten Überwachungszeit entspricht,
- Auslösung eines Abbruchs der Verbindung zu dem ersten Kommunikationsgerät, wenn innerhalb der ersten Empfangszeit nach dem Empfang des letzten Lebenszeichensignals kein neues Lebenszeichensignal von dem ersten Kommunikationsgerät empfangen wird.

2. Verfahren nach Anspruch 1, wobei das zweite Kommunikationsgerät nach Empfang der ersten Überwachungsanforderung dem ersten Kommunikationsgerät mitteilt (102), ob die Kommunikationsverbindung zwischen dem ersten und zweiten Kommunikationsgerät überwacht werden soll oder nicht.

3. Verfahren nach Anspruch 1, wobei das Verfahren den Empfang einer dynamisch geänderten ersten Überwachungszeit von dem ersten durch das zweite Kommunikationsgerät umfasst.

4. Verfahren nach Anspruch 3, wobei die Lebenszeichensignale die dynamisch geänderte erste Überwachungszeit aufweisen.

5. Verfahren nach Anspruch 1, wobei die erste Überwachungszeit den Wert unendlich annehmen kann.

6. Verfahren nach Anspruch 1 , wobei die erste Empfangszeit unabhängig von der Signallaufzeit einer Übertragung von Daten vom ersten zum zweiten Kommunikationsgerät ist.

7. Verfahren nach Anspruch 1, wobei das zweite Kommunikationsgerät nach Empfang der Überwachungsanforderung festlegt (102), ob es der Verbindungsüberwachung zustimmt, wobei im Falle des Zustimmens das zweite Kommunikationsgerät eine zweite Überwachungszeit an das erste Kommunikationsgerät sendet, wobei die zweite Überwachungszeit eine Auslösung eines Verbindungsabbruchs durch das erste Kommunikationsgerät ermöglicht, wenn innerhalb einer aus der zweiten Überwachungszeit ermittelten zweiten Empfangszeit nach dem Empfang eines letzten Lebenszeichensignals von dem zweiten Kommunikationsgerät kein neues Lebenszeichensignal von dem zweiten Kommunikationsgerät empfangen wird.

8. Verfahren nach Anspruch 7, die zweite Überwachungszeit unabhängig von der ersten Überwachungszeit ist.

9. Verfahren nach Anspruch 7, wobei das Verfahren ferner ein Senden von Lebenszeichensignalen durch das zweite Kommunikationsgerät an das erste Kommunikationsgerät umfasst, wobei nach dem Senden des letzten Lebenszeichensignals ein neues Lebenszeichensignal innerhalb der zweiten Überwachungszeit übermittelt wird.

10. Verfahren nach Anspruch 1, wobei ein Lebenszeichensignal
- jede Art von Signal umfasst, welches bei der Kommunikation von Nutzdaten zwischen dem ersten und zweiten Kommunikationsgerät übertragen wird oder
- ein Signal umfasst, welches speziell als Lebenszeichen übertragen wird.

11. Verfahren nach Anspruch 1, wobei die Verbindungsüberwachung zwischen dem ersten und dem zweiten Kommunikationsgerät über einen ersten Kommunikationskanal erfolgt, wobei das zweite Kommunikationsgerät ferner gleichzeitig über einen zweiten Kommunikationskanal mit dem ersten Kommunikationsgerät verbunden ist, wobei im Fall der Auslösung des Abbruchs der Verbindung durch das zweite Kommunikationsgerät das zweite Kommunikationsgerät die Kommunikation über den ersten Kommunikationskanal abbricht und die Kommunikation über den zweiten Kommunikationskanal fortgesetzt wird.

12. Computerprogrammprodukt mit von einem Prozessor ausführbaren Instruktionen zur Durchführung aller der Verfahrensschritte gemäß den vorigen Ansprüchen.

13. Kommunikationsgerät, wobei das Kommunikationsgerät zur Verbindungsüberwachung eines weiteren Kommunikationsgeräts ausgebildet ist, wobei das Kommunikationsgerät zur Durchführung der folgenden Schritte ausgebildet ist:
- Empfang (100) einer ersten Überwachungsanforderung von dem weiteren Kommunikationsgerät, wobei die erste Überwachungsanforderung eine erste Überwachungszeit aufweist,
- Bestimmung einer ersten Empfangszeit aus der ersten Über-wachungszeit, wobei innerhalb der ersten Empfangszeit nach Empfang eines letzten Lebenszeichensignals ein neues Lebenszeichensignal vom anderen Kommunikationspartner empfangen werden muss,
- Empfang (108; 114; 118; 120; 122; 124; 200; 202; 204; 206; 300; 302; 304; 306; 308; 310; 312; 314; 316; 318) von Lebenszeichensignalen von dem weiteren Kommunikationsgerät, wobei ein Zeitintervall, mit welchem die Lebenszeichensignale vom ersten Kommunikationsgerat an das zweite Kommunikationsgerät übertragen werden, der ersten Überwachungszeit entspricht,
- Auslösung eines Abbruchs der Verbindung zu dem weiteren Kommunikationsgerät, wenn innerhalb der ersten Empfangszeit nach dem Empfang des letzten Lebenszeichensignals kein neues Lebenszeichensignal von dem weiteren Kommunikationsgerät empfangen wird.

## Claims

1. Method of connection monitoring between a first and a second communication device, the method comprising the following steps taken by the second communication device:
- Receipt (100) of a first monitoring request from the first communication device, it being possible for the first monitoring request to have a first monitoring time,
- Determination of a first reception time on the basis of the first monitoring time, wherein within the first reception time following receipt of the last lifebeat signal, a new lifebeat signal must be received from another communication partner,
- Receipt (108; 114; 118; 120; 122; 124; 200; 202; 204; 206; 300; 302; 304; 306; 308; 310; 312; 314; 316; 318) of lifebeat signals from the first communication device, a time interval with which the lifebeat signals are transmitted from the first communication device to the second communication device corresponding to the first monitoring time,
- Triggering of an interruption in the connection to the first communication device if, during the first reception time following its receipt of the last lifebeat signal, it does not receive a new lifebeat signal from the first communication device.

2. Method according to claim 1, wherein, upon receipt of the first monitoring request, the second communication device informs the first communication device (102) whether or not the communication connection between the first and the second communication devices is to be monitored.

3. Method according to claim 1, wherein the method involves the second communication device receiving a dynamically changed first monitoring time from the first communication device.

4. Method according to claim 3, wherein the lifebeat signals have the dynamically changed first monitoring time.

5. Method according to claim 1, wherein the first monitoring time can have the value "infinite".

6. Method according to claim 1, wherein the first reception time is independent of the signal delay for a transfer of data from the first to the second communication device.

7. Method according to claim 1, wherein, following receipt of the monitoring request, the second communication device states (102) whether it agrees to connection monitoring, it being possible, if the second communication device agrees, for the second communication device to send a second monitoring time to the first communication device, this second monitoring time making it possible for the first communication device to interrupt the connection if, within a second reception time - determined on the basis of the second monitoring time - following the second communication device's receipt of the last lifebeat signal, the first communication device receives no new lifebeat signal from the second communication device.

8. Method according to claim 7, wherein the second monitoring time is independent of the first monitoring time.

9. Method according to claim 7, wherein the method also comprises the transmission of lifebeat signals by the second communication device to the first communication device, it being possible, after the last lifebeat signal has been transmitted, for a new lifebeat signal to be transmitted within the second monitoring time.

10. Method according to claim 1, wherein "lifebeat signal" includes
- any kind of signal that is transmitted between the first and the second communication devices during the communication of payload data, or
- a signal that is transmitted specially for the purpose of indicating a lifebeat.

11. Method according to claim 1, wherein the connection monitoring between the first and the second communication devices takes place via a first communication channel, it being possible, also, for the second communication device to be connected to the first communication device simultaneously via a second communication channel, and wherein, in the event that the second communication device triggers the interruption of the connection, for the second communication device to break off communication via the first communication channel, with communication being continued via the second communication channel.

12. Computer program product with instructions, executable by a processor, for implementing all of the method steps according to the preceding claims.

13. Communication device, wherein the communication device is configured to perform connection monitoring for another communication device and to perform the following steps:
- Receipt (100) of a first monitoring request from the other communication device, it being possible for the first monitoring request to have a first monitoring time,
- Determination of a first reception time on the basis of the first monitoring time wherein within the first reception time following receipt of the last lifebeat signal, a new lifebeat signal must be received from another communication partner,
- Receipt (108; 114; 118; 120; 122; 124; 200; 202; 204; 206; 300; 302; 304; 306; 308; 310; 312; 314; 316; 318) of lifebeat signals from the other communication device, a time interval with which the lifebeat signals are transmitted from the first communication device to the second communication device corresponding to the first monitoring time,
- Triggering of an interruption in the connection to the other communication device if, during the first reception time following its receipt of the last lifebeat signal, the communication device does not receive a new lifebeat signal from the other communication device.

## Revendications

1. Procédé de contrôle de la liaison entre un premier et un deuxième appareils de communication, le procédé comprenant les stades suivants effectués par le deuxième appareil de communication :
- réception ( 100 ) d'une première demande de contrôle du premier appareil de communication, la première demande de contrôle ayant un premier temps de contrôle,
- détermination d'un premier temps de réception à partir du premier temps de contrôle, dans lequel, dans le premier temps de réception, un signal nouveau de signe de vie de l'autre partenaire de communication doit être reçu après la réception d'un dernier signal de signe de vie.
- réception ( 108, 114, 118, 120, 122, 124, 200, 202, 204, 206, 300, 302, 304, 306, 308, 310, 312, 314, 316, 318 ) de signaux de signe de vie du premier appareil de communication, un intervalle de temps dans lequel les signaux de signe de vie sont transmis du premier appareil de communication au deuxième appareil de communication correspondant au premier temps de contrôle,
- déclenchement d'une interruption de la liaison vers le premier appareil de communication si, dans le premier temps de réception, il n'est pas reçu, après la réception du dernier signal de signe de vie, un signal nouveau de signe de vie du premier appareil de communication.

2. Procédé suivant la revendication 1, dans lequel le deuxième appareil de communication communique ( 102 ), après la réception de la première demande de contrôle, au premier appareil de communication si la liaison de communication, entre le premier et le deuxième appareils de communication, doit être contrôlée ou ne le doit pas.

3. Procédé suivant la revendication 1, dans lequel le procédé comprend la réception d'un premier temps de contrôle modifié dynamiquement du premier par le deuxième appareil de communication.

4. Procédé suivant la revendication 3, dans lequel les signaux de signe de vie ont un premier temps de contrôle modifié dynamiquement.

5. Procédé suivant la revendication 1, dans lequel le premier temps de contrôle peut prendre la valeur infinie.

6. Procédé suivant la revendication 1, dans lequel le premier temps de réception est indépendant du temps de passage du signal d'une transmission de données du premier au deuxième appareil de communication.

7. Procédé suivant la revendication 1, dans lequel le deuxième appareil de communication fixe ( 102 ), après réception de la demande de contrôle, s'il accepte le contrôle de la liaison, le deuxième appareil de communication envoyant dans le cas de l'acceptation un deuxième temps de contrôle au premier appareil de communication, le deuxième temps de contrôle rendant possible un déclenchement d'une interruption de la liaison par le premier appareil de communication si, dans un deuxième temps de réception déterminé à partir du deuxième temps de contrôle, il n'est pas reçu par le deuxième appareil de communication, après la réception d'un dernier signal de signe de vie par le deuxième appareil de communication, un signal nouveau de signe de vie.

8. Procédé suivant la revendication 7, dans lequel le deuxième temps de contrôle est indépendant du premier temps de contrôle.

9. Procédé suivant la revendication 7, dans lequel le procédé comprend en outre un envoi de signaux de signe de vie par le deuxième appareil de communication au premier appareil de communication, un signal nouveau de signe de vie étant transmis dans le deuxième temps de contrôle après l'envoi du dernier signal de signe de vie.

10. Procédé suivant la revendication 1, dans lequel un signal de signe de vie
- comprend chaque type de signal qui est transmis dans la communication de données utile entre le premier et le deuxième appareils de communication ou
- comprend un signal qui est transmis spécialement comme signe de vie.

11. Procédé suivant la revendication 1, dans lequel le contrôle de la liaison entre le premier et le deuxième appareils de communication s'effectue par un premier canal de communication, le deuxième appareil de communication étant relié en même temps au premier appareil de communication par un deuxième canal de communication, dans lequel, dans le cas du déclenchement de l'interruption de la liaison par le deuxième appareil de communication, le deuxième appareil de communication interrompt la communication par le premier canal de communication et poursuit la communication par le deuxième canal de communication.

12. Produit de programme d'ordinateur ayant des instructions pouvant être exécutées par un processeur pour la mise en oeuvre de tous les stades du procédé suivant les revendications précédentes.

13. Appareil de communication, l'appareil de communication étant constitué pour le contrôle de la liaison d'un autre appareil de communication, l'appareil de communication étant constitué par effectuer les stades suivants :
- réception ( 100 ) d'une première demande de contrôle de l'autre appareil de communication, la première demande de contrôle ayant un premier temps de contrôle,
- détermination d'un premier temps de réception à partir du premier temps de contrôle, dans lequel, dans le premier temps de réception, un signal nouveau de signe de vie de l'autre partenaire de communication doit être reçu après la réception d'un dernier signal de signe de vie.
- réception ( 108, 114, 118, 120, 122, 124, 200, 202, 204, 206, 300, 302, 304, 306, 308, 310, 312, 314, 316, 318 ) de signaux de signe de vie de l'autre appareil de communication, un intervalle de temps, dans lequel les signaux de signe de vie sont transmis du premier appareil de communication au deuxième appareil de communication, correspondant au premier temps de contrôle,
- déclenchement d'une interruption de la liaison vers l'autre appareil de communication si, dans le premier temps de réception, il n'est pas reçu, après la réception du dernier signal de signe de vie, un signal nouveau de signe de vie de l'autre appareil de communication.
